Europäisches Patentamt

European Patent Office

Office européen des brevets

(19)

(11) Veröffentlichungsnummer: **0 089 668**
**A1**

(12) **EUROPÄISCHE PATENTANMELDUNG**

(21) Anmeldenummer: 83102795.8

(22) Anmeldetag: 21.03.83

(51) Int. Cl.³: **C 08 L 81/02**
**H 01 B 3/30**

(30) Priorität: 24.03.82 DE 3210873

(43) Veröffentlichungstag der Anmeldung:
28.09.83 Patentblatt 83/39

(84) Benannte Vertragsstaaten:
AT BE CH DE FR GB IT LI LU NL SE

(71) Anmelder: SIEMENS AKTIENGESELLSCHAFT
Berlin und München Wittelsbacherplatz 2
D-8000 München 2(DE)

(72) Erfinder: Quella, Ferdinand, Dr.
Parkstrasse 9
D-8035 Gauting(DE)

(72) Erfinder: Schmidt, Hans-Friedrich, Dr.-Ing.
Graf-Tattenbach-Weg 2
D-8196 Eurasburg(DE)

(54) Verbesserung der Eigenschaften von schwefelhaltigen Polymeren, z. B. Polyphenylensulfid.

(57) Der Vernetzungsprozeß von schwefelhaltigen Polymeren, zum Beispiel Polyphenylensulfid, läßt sich durch Zusatz von Metalloxiden, zum Beispiel $Fe_2O_3$ oder $Al_2O_3$, beschleunigen. Die Geschwindigkeit dieses Prozesses hängt von der Menge der zugesetzten Metalloxide ab. Ein derartiger Zusatz beschleunigt gleichzeitig den Röstprozeß und ergibt eine Eignung als Umhüllmasse.

EP 0 089 668 A1

SIEMENS AKTIENGESELLSCHAFT          Unser Zeichen

Berlin und München                  VPA 82 P 1220

Verbesserung der Eigenschaften von schwefelhaltigen
Polymeren, z. B. Polyphenylensulfid.

Polyphenylensulfid (PPS) wird wegen seiner guten mechanischen und thermischen Eigenschaften als thermoplastischer
Kunststoff geschätzt. Gefüllt mit 40 % Glasfaser wird es
vor allem zu Teilen verarbeitet, von denen man eine hohe
Wärmeformbeständigkeit erwartet.

Der Erfindung liegt die Aufgabe zugrunde, die mechanischen
Eigenschaften von schwefelhaltigen Polymeren, z. B. Polyphenylensulfid, zu verbessern indem die übliche Temperung
von PPS-Teilen zum Beispiel 3 h bei 210°C durch eine vorzeitige Einleitung der Vernetzung dieses Prozesses vorweggenommen wird, bzw. bei der Herstellung Energiekosten einzusparen. Diese Aufgabe wird dadurch gelöst, daß zur Erzielung eines vernetzten oder teilvernetzten Produktes
bzw. zur Beschleunigung dieses Prozesses dem Polymer Metalloxide beigemischt sind.

Es wurde nun gefunden, daß 0,1 % $Fe_2O_3$ oder 0,1 % $Al_2O_3$,
basisch, den Abbau bei 200°C unter Luft, das heißt die
Vernetzung, um den Faktor von ca. 1,5 beschleunigen.
Setzt man also solche Zusätze in dieser Größenordnung bis
ca. 1 % zu, so ist eine mechanische Beeinträchtigung
(auch Farbe, elektrische Eigenschaften) kaum zu befürchten. Stattdessen läßt sich die Temperung wesentlich verkürzen (Energiekosten). Eine weitere Reduzierung der Temperungszeit bis gegen Null ist dadurch zu erzielen, daß
man an den oberen Bereich der Abspritztemperatur bis
370°C geht und/oder in eine beheizte Form abspritzt.

Wed 1 Plr/18.2.1983

Um jedoch bei hohen Einsatztemperaturen eine gegenüber normalen PPS (ohne Metalloxide) schädliche korrosive schwefelhaltige Ausgasung zu vermeiden, sollten die Zusatzmengen möglichst gering gewählt werden. Eine geringe Menge, z. B. 0,1 % und kleiner, Metalloxid besitzt nur eine relativ geringe abbaubeschleunigende Wirkung und bewirkt zunächst nur eine ausreichend hohe Vernetzung.

Analog diesem Prozeß kann auch der sogenannte "Röstprozeß" bei der Herstellung von PPS kostengünstiger gestaltet werden. Bei diesem Prozeß wird ein relativ niedermolekulares, fast weißes Material durch einen Röstvorgang, zum Beispiel 8 h bei 150 ... 200°C, in ein hochmolekulares, teilvernetztes PPS umgewandelt. Durch entsprechende Oxidzusätze in geringer Menge wie 0,1 % läßt sich dieser Prozeß wesentlich reduzieren. Unter Umständen kann der Zusatz als Pigment dienen. In der geringen Menge wird der Zusatz gegebenenfalls in Eisensulfid umgewandelt und kann zum Beispiel erneut zugesetzt werden in gleicher Menge zum Granulat zur Erzielung verzugsarmer Teile durch teilweise Vorwegnahme der Vernetzung im Temperprozeß.

Die Analogie dieses Beschleunigungsvorganges läßt sich noch weiter nutzen. Elektrische Bauelemente (Chips, Dioden) werden heute meist mit Preßmassen (zum Beispiel Epoxidharze) umhüllt. Der Vorteil dieser Massen ist, daß ihr duroplastischer Charakter einen hohen Füllstoffanteil, zum Beispiel an Quarzmehl 60 ... 80 %, erlaubt. Die Masse wird dann preiswert. Nachteilig sind jedoch geringe Lagerfähigkeit, relativ geringe Taktzeiten, Feuchteempfindlichkeit, hydrolysierbare Chloride und anderes.

Nach der Erfindung kann ein mit zugesetzten Metalloxiden angereichertes Polymer als vernetzbare Umhüllmasse, zum Beispiel für elektrische Bauelemente, Verwendung finden. Damit lassen sich die erwähnten Nachteile von Preßmassen aus Epoxidharzen weitgehend reduzieren: keine Lagerprobleme, sehr geringe Taktzeiten.

Thermoplaste können jedoch nicht sehr hoch gefüllt werden. In diesem Fall hat PPS eine ideale Zwitterstellung: Es vernetzt langsam. Füllgrade von 60 bis 80 % und mehr lassen sich einfach erreichen. Ein geringer Zusatz von $Al_2O_3$ oder $Fe_2O_3$ bewirkt zusätzlich eine Vernetzung, so daß man mit solchen Zusätzen eine neuartige, lagerfähige, fast duroplastische Masse zur Verfügung hat. Sofern die Festigkeit nach dem Spritzgießen noch nicht ganz ausreicht, kann man nachtempern, wie dies auch bei Duroplasten häufig durchgeführt werden muß.

Ein prinzipieller Nachteil des PPS als Umhüllmasse ist seine geringe Oberflächenhaftung auf metallischen Oberflächen. Eine Nachschwindung oder die Bildung von Spalten zwischen Metall und Kunststoff würde zum Ausfall der Bauteile führen. Dieses Problem läßt sich jedoch einfach über die Auswahl des Füllstoffes lösen. Bei einem hohen Anteil zum Beispiel an Quarzmehl oder hochgeglühtem (inerten) Aluminiumoxid ergibt sich bereits eine wesentliche Verbesserung der Oberflächenhaftung.

Die Erfindung ist nicht auf Polyphenylensulfid beschränkt. Dieses Prinzip gilt vielmehr ganz allgemein für alle Thermoplaste mit Schwefel in der Hauptkette, bei denen keine sterische Hinderung die Vernetzung unmöglich macht.

Die in der Tabelle dargestellten Ergebnisse zeigen den deutlichen Vorteil der Erfindung:
Während üblicherweise PPS-Teile 2 h und mehr bei einer Temperatur von über 200°C unter Luft getempert werden, um eine bestimmte Schlagkraft zu erhalten (die Teile sollen auch einheitlicher im Verhalten werden durch Ausgleich von Spannungen), kann ein Effekt wie er 5 h Temperung bei 210°C entspricht bereits durch einen Zusatz von

$0,5$ % $Fe_2O$ erreicht werden. Ein vergleichbarer Effekt ergibt zum Beispiel 1 % Massenanteil basisches $Al_2O_3$ nach $0,5$ h Temperung bei 210°C.

Die Schlagkraft der Proben mit und ohne Zusatz wird durch längere Temperung noch weiter reduziert, die Vernetzung läßt sich also weitertreiben. Die Herstellung der Probenstäbe erfolgte durch einfaches Auftrommeln der pulverförmigen Zusätze und anschließendes Spritzgießen.

Ausführungsbeispiel:

Tabelle: Änderung der Schlagkraft in Abhängigkeit von Temperbedingungen und Zusätzen
(* Mittelwerte aus je 10 Versuchen)

| PPS R 4 | Temperzeit/ Temperatur | Schlagkraft * $(KJ/cm^2)$ |
|---|---|---|
| ohne Zusatz | ungetempert | 8,56 |
| ohne Zusatz | 0,5 h/210°C | 7,04 |
| ohne Zusatz | 1 h /210°C | 6,98 |
| ohne Zusatz | 5 h /210°C | 6,69 |
| 0,1 % Massenanteil $Fe_2O_3$ | ungetempert | 8,02 |
| 0,5 % $Fe_2O_3$ | ungetempert | 6,65 |
| 1 % $Fe_2O_3$ | ungetempert | 6,65 |
| 0,1 % $Fe_2O_3$ | 0,5 h/210°C | 6,6 |
| 0,5 % $Fe_2O_3$ | 0,5 h/210°C | 6,04 |
| 1 % $Fe_2O_3$ | 0,5 h/210°C | 5,44 |
| 0,1 % $Al_2O_3$ basisch | ungetempert | 8,3 |
| 0,5 % $Al_2O_3$ basisch | ungetempert | 8,5 |
| 1 % $Al_2O_3$ basisch | ungetempert | 8,7 |
| 0,1 % $Al_2O_3$ basisch | 0,5 h, 210°C | 7,1 |
| 0,5 % $Al_2O_3$ basisch | 0,5 h, 210°C | 6,8 |
| 1 % $Al_2O_3$ basisch | 0,5 h, 210°C | 6,1 |

5 Patentansprüche

Patentansprüche

1. Schwefelhaltiges Polymer, zum Beispiel Polyphenylensulfid, d a d u r c h g e k e n n z e i c h n e t , daß zur Erzielung eines vernetzten oder teilvernetzten Produktes bzw. zur Beschleunigung dieses Prozesses dem Polymer Metalloxide beigemischt sind.

2. Schwefelhaltiges Polymer nach Anspruch 1, d a - d u r c h g e k e n n z e i c h n e t , daß zur Erhöhung der Schlagzähigkeit spritzgegossener Teile Eisenoxid ($Fe_2O_3$) oder basisches Aluminiumoxid ($Al_2O_3$) Verwendung finden.

3. Schwefelhaltiges Polymer nach Anspruch 1, d a - d u r c h g e k e n n z e i c h n e t , daß dem niedermolekularen Material vor dem Röstprozeß Metalloxide, zum Beispiel 0,1 %, zugesetzt sind.

4. Verwendung eines schwefelhaltigen Polymers, zum Beispiel Polyphenylensulfid, mit zugesetzten Metalloxiden nach Anspruch 1 als vernetzbare Umhüllmasse, zum Beispiel für elektrische Bauelemente.

5. Verwendung eines schwefelhaltigen Polymers nach Anspruch 4, d a d u r c h g e k e n n z e i c h n e t , daß ca. 60 bis 80 % inerte Füllstoffe, zum Beispiel Quarzmehl, beigemischt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US-A-4 036 822 (P.A. PATEL et al.) <br> * Ansprüche; Beispiel 1 * | 1,2 | C 08 L 81/02 <br> H 01 B 3/30 |
| X | DE-A-2 635 570 (TELECTRIC) <br> * Ansprüche * | 1,2 | |
| X | US-A-3 275 607 (J.N. COKER) <br> * Ansprüche * | 1,4,5 | |
| X | FR-A-2 075 755 (PHILLIPS) <br> * Anspruch * | 1,2 | |
| X | FR-A-2 378 067 (SEKISUI) <br> * Ansprüche * | 1,2 | |
| Y | CHEMICAL ABSTRACTS, Band 87, 1977, Seite 54, Nr. 185726d, Columbus, Ohio, USA <br> & JP - A - 77 61000 (HINOMOTO DENKI K.K.) 19.05.1977 * Zusammenfassung * | 1,4 | RECHERCHIERTE SACHGEBIETE (Int. Cl. ³) <br><br> C 08 L <br> H 01 B |

Der vorliegende Recherchenbericht wurde für alle Patentansprüche erstellt.

| Recherchenort <br> DEN HAAG | Abschlußdatum der Recherche <br> 28-06-1983 | Prüfer <br> DERAEDT G. |
|---|---|---|